# EUROPEAN PATENT SPECIFICATION

(11) **EP 2 566 127 B1**
(45) Date of publication and mention of the grant of the patent: **27.03.2019**
(21) Application number: 11774281.7
(22) Date of filing: 20.01.2011
(51) Int. Cl.: H04L 29/06

(54) **METHOD AND SYSTEM FOR REPLACING REPLACE PARAMETER**
VERFAHREN UND SYSTEM ZUM ERSETZEN VON ERSATZPARAMETERN
PROCÉDÉ ET SYSTÈME DE REMPLACEMENT DE PARAMÈTRE DE REMPLACEMENT

(30) Priority: 30.04.2010 CN 201010165397
(43) Date of publication of application: 06.03.2013
(73) Proprietor: ZTE Corporation, Shenzhen, Guangdong 518057 (CN)
(72) Inventor: GAO, Yang, Guangdong 518057 (CN); JIN, Bin, Guangdong 518057 (CN); YU, Xutao, Guangdong 518057 (CN)
(74) Representative: Protector IP AS
(86) International application number: PCT/CN2011/070405
(87) International publication number: WO 2011/134290

(56) References cited:
- EP-A1- 2 076 004
- EP-A1- 2 112 798
- WO-A2-2005/039061
- CN-A- 1 980 225
- CN-A- 101 163 142
- US-A1- 2007 067 470
- SA2: "DRAFT LS Response on requirements for one AS to be able to read and/or modify the initial filter criteria of another AS", 3GPP DRAFT; S2-030275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20030128, 28 January 2003 (2003-01-28), XP050242333, [retrieved on 2003-01-28]
- "3rd Generation Partnership Project; Technical Specification Group Core Network and Terminals; IP multimedia call control protocol based on Session Initiation Protocol (SIP) and Session Description Protocol (SDP); Stage 3 (Release 9)", 3GPP STANDARD; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.1, 1 April 2010 (2010-04-01), pages 1-659, XP050402282, [retrieved on 2010-04-01]
- MAHY CISCO SYSTEMS R ET AL: "The Session Initiation Protocol (SIP) "Replaces" Header; rfc3891.txt", NETWORK WORKING GROUP RFC 1717, INTERNET SOCIETY (ISOC) 4, RUE DES FALAISES CH- 1205 GENEVA, SWITZERLAND, CH, 1 September 2004 (2004-09-01), XP015009668, ISSN: 0000-0003
- 'Technical Specification Group Core Network and Terminals; IP multimedia call control protocol based on Session Initiation Protocol (SIP) and Session Description Protocol (SDP);Stage 3 (Release 9)' 3GPP TS 24.229 V9.3.1 March 2010, XP050402282

## Description

### Technical Field

The present invention relates to the field of communication technology, and particularly, to a method and system for an application server replacing a Replaces parameter in an IP Multimedia Subsystem (IMS).

### Background of the Related Art

The 3rd Generation Partner Project (3GPP) defines that, when an Application Server (AS) processes a Session Initiation Protocol (SIP) message, a behavior mode can be a Proxy, a Routeing Back to Back User Agent (Routeing B2BUA) or an Initiating B2BUA. Wherein, the Routeing B2BUA is a processing mode which is quite similar to the Proxy, when the AS uses the Routeing B2BUA or Initiating B2BUA behavior mode, Dialog IDs at two sides of the AS are modified by the AS, and the Dialog IDs at the two sides of the AS will be different.

According to the definition in the chapter 5.7.5 of 3GPP 24.229, when the AS in the IMS receives an Initial request for a dialog with a Replaces Header, it is required to check whether the AS is the Routeing B2BUA or Initiating B2BUA behavior mode. If the AS is the Routeing B2BUA or Initiating B2BUA behavior mode, and the AS is precisely a replacement for a Dialog ID carried in the Replaces Header, it is required to replace the Dialog ID of the Replaces Header before forwarding this Initial request. The object of the replacement is that, since a network element in a forward direction of the AS can only identify a Dialog1 and can not identify a Dialog2, there is a network element (the Routeing B2BUA AS) which performs the Dialog replacement.

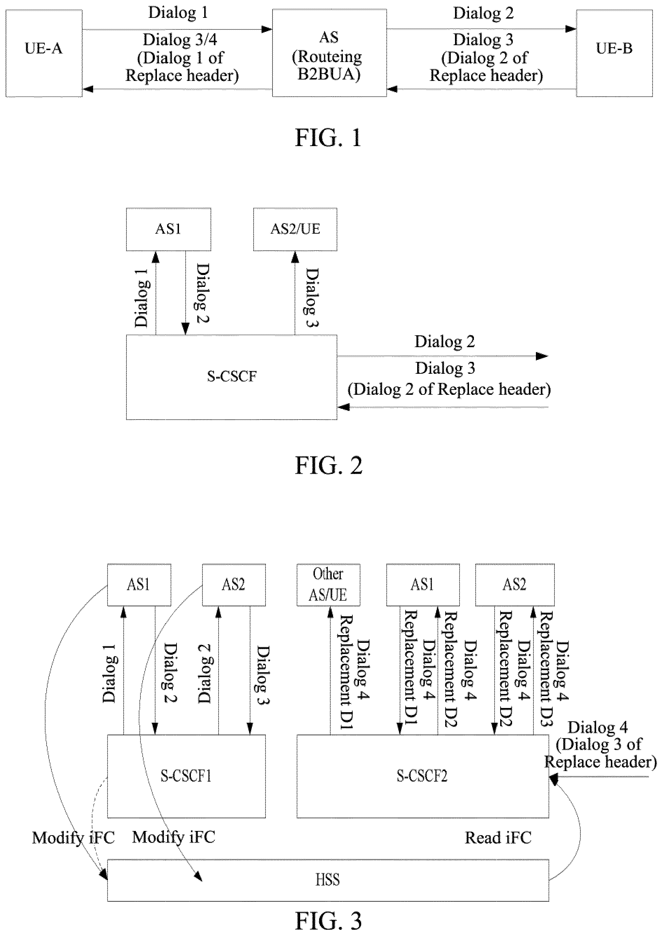

The specific flow is shown in FIG. 1, with respect to a request for the Dialog 1, the AS which serves as the Routeing B2BUA or Initiating B2BUA executes the B2BUA behavior and uses a new Dialog2 to forward the request. When a new initial request (using a Dialog3) with Replaces Header being Dialog2 is received, the AS needs to modify the Replaces Header to be Dialog 1 for forwarding. The Dialog3 can be used continuously for forwarding the request or a new Dialog ID (Dialog4) is used.

The following problem exists in the related art. The 3GPP only defines the processing after the AS receives such request, but in practical applications, an initial request for the Dialog3 may not be sent to this AS, which causes that the subsequent network elements can not identify the Dialog ID (such as the Dialog 1 in FIG. 1) of the Replaces Header. According to the RFC3891, when the Dialog ID of the Replaces Header can not be identified or matched, a receiving party can use 481 to reject the request.

Therefore, it is required to provide a solution for guaranteeing the new initial request. If the Replaces Header is carried and the Dialog ID carried by the Replaces Header was replaced by the AS with the B2BUA behavior mode, the Dialog ID can be replaced correctly again in the process of sending the Dialog ID to the forward network element, to guarantee that the Replaces Header can be processed correctly.

The document WO2005039061A2 discloses a system, apparatus, and method for routing communication requests based on presence information.

The document "SA2: DRAFT LS Response on requirements for one AS to be able to read and/or modify the initial filter criteria of another AS, 3GPP DRAFT; S2-030275, 3RD GENERATION PARTNERSHIP PROJECT(3GPP), MOBILE COMPETENCE CENTRE; 650, ROUTE DES LUCIOLES; F-06921 SOPHIA-ANTIPOLIS CEDEX; FRANCE, vol. SA WG2, no. San Francisco, USA; 20030128, 28 January 2003 (2003-01-28), XP050242333" discusses requirements for one AS to be able to read and/or modify the initial filter criteria of another AS.

The document EP2076004A1 discloses a method for online charging.

The document EP2112798A1 discloses service controlling in a service provisioning system.

The document "3rd Generation Partnership Project; Technical Specification Group Core Network and Terminals; IP multimedia call control protocol based on Session Initiation Protocol (SIP) and Session Description Protocol (SDP); Stage 3(Release 9)" discusses IP multimedia call control protocol based on Session Initiation Protocol (SIP) and Session Description Protocol (SDP).

### Summary of the Invention

The technical problem required to be solved by the present invention is to provide a method, according to independent claim 1, and system, according to independent claim 6, for replacing a Replaces parameter, which guarantees that a Replaces Header carried in an initial request can be replaced correctly, and solves the influence generated from deficiency of support of the existing 3GPP AS to the Replaces parameter.

Further embodiments are provided in the dependent claims.

In order to solve the above problem, the present invention provides a method for replacing a Replaces parameter, which is applied to an IP Multimedia Subsystem (IMS). The method comprises:
an Application Server (AS), as a Routeing Back to Back User Agent (Routeing B2BUA) or an Initiating B2BUA, receiving an Initial request for a dialog, modifying an Initial Filter Criteria (iFC) of a user of sending party of the initial request, or modifying an iFC of a user of receiving party of the initial request, or modifying an iFC of a service-related user of the receiving party.

Wherein, the user includes all Public User Identities (PUI) corresponding to a Private User Identity (PVI) of the user, or an alias of the user.

Wherein, the step of the AS modifying the iFC comprises:
the AS modifying the iFC in a Home Subscriber Server (HSS), and modifying the iFC in a Serving-Call Session Control Function (S-CSCF) through the HSS; or,
the AS modifying the iFC in the HSS and the iFC in the S-CSCF.

Wherein, the S-CSCF is a S-CSCF of the user of receiving party of the initial request, and the HSS is a HSS of the user of receiving party of the initial request; or,
the S-CSCF is a S-CSCF of the service-related user of the receiving party of the initial request, and the HSS is a HSS of the service-related user of the receiving party of the initial request.

Wherein, modifying the iFC comprises: adding a triggering rule and placing the triggering rule at the head of a triggering sequence of the iFC;
a Service Point Trigger of the triggering rule is specifically:
if the user of sending party that receives a second initial request is the user of receiving party of the initial request or the service-related user of the receiving party of the initial request,
and when the second initial request carries a Replaces Header, if a Dialog ID of the Replaces Header is a Dialog ID of an outgoing side of the AS in the initial request, triggering the AS.

Wherein, the S-CSCF is a S-CSCF of the user of sending party of the initial request, and the HSS is a HSS of the user of sending party of the initial request.

Wherein, modifying the iFC comprises: adding a triggering rule and placing the triggering rule at the head of a triggering sequence of the iFC;
a Service Point Trigger of the triggering rule is specifically:
if the user of receiving party that receives a second initial request is the user of sending party of the initial request,
and when the second initial request carries a Replaces Header, if a Dialog ID of the Replaces Header is a Dialog ID of an outgoing side of the AS in the initial request, triggering the AS.

The above method further comprises: when the S-CSCF receives the second initial request, triggering the AS according to the modified iFC.

The above method further comprises: after the dialog ends, the AS restoring the modified iFC to an original iFC.

Wherein, when the initial request goes through multiple ASs which execute B2BUA behaviors according to a first sequence, modifying the iFC comprises: according to the first sequence, adding a triggering rule of the current AS and placing the triggering rule at the head of the triggering sequence of the iFC, so that the added triggering rules corresponding to the multiple ASs at the head of the modified iFC are arranged in a reversed order according to the first sequence.

The present invention further provides a system for replacing a Replaces parameter, which is applied to an IP Multimedia Subsystem (IMS). The system comprises an Application Server (AS) executing a Back to Back User Agent (B2BUA) behavior, and the AS comprises an Initial Filter Criteria (iFC) modification unit, wherein:
the iFC modification unit is configured to: when the AS, as a Routeing B2BUA or an Initiating B2BUA, receives an Initial request for a dialog, modify an iFC of a user of sending party of the initial request, or modify an iFC of a user of receiving party of the initial request, or modify an iFC of a service-related user of the receiving party.

The system further comprises a HSS,
the iFC modification unit is configured to: modify the iFC in the HSS, and indicate the HSS to modify the iFC in a S-CSCF; or, modify the iFC in the HSS and the iFC in the S-CSCF;
the HSS is configured to: modify the iFC in the S-CSCF according to an indication of the iFC modification unit.

Wherein, the S-CSCF is a S-CSCF of the user of receiving party of the initial request, and the HSS is a HSS of the user of receiving party of the initial request; or,
the S-CSCF is a S-CSCF of the service-related user of the receiving party of the initial request, and the HSS is a HSS of the service-related user of the receiving party of the initial request.

Modifying the iFC comprises: adding a triggering rule and placing the triggering rule at the head of a triggering sequence of the iFC;
a Service Point Trigger of the triggering rule is: if the user of sending party that receives a second initial request is the user of receiving party of the initial request or the service-related user of the receiving party of the initial request, and when the second initial request carries a Replaces Header, if a Dialog ID of the Replaces Header is a Dialog ID of an outgoing side of the AS in the initial request, triggering the AS.

Wherein, the S-CSCF is a S-CSCF of the user of sending party of the initial request, and the HSS is a HSS of the user of sending party of the initial request;
modifying the iFC comprises: adding a triggering rule and placing the triggering rule at the head of a triggering sequence of the iFC;
a Service Point Trigger of the triggering rule is: if the user of receiving party that receives a second initial request is the user of sending party of the initial request, and when the second initial request carries a Replaces Header, if a Dialog ID of the Replaces Header is a Dialog ID of an outgoing side of the AS in the initial request, triggering the AS.

Wherein, the iFC modification unit is further configured to: after the dialog ends, restore the modified iFC to an original iFC.

### Brief Description of Drawings

FIG. 1 is a schematic diagram of an AS executing a B2BUA behavior.
FIG. 2 is a schematic diagram of multiple ASs executing B2BUA behaviors (a S-CSCF accepting a new initial request is identical with an original S-CSCF).
FIG. 3 is a schematic diagram of multiple ASs executing B2BUA behaviors (a S-CSCF accepting a new initial request is different from an original S-CSCF).
FIG. 4 is a flow diagram of the method according to one application example of the present invention.

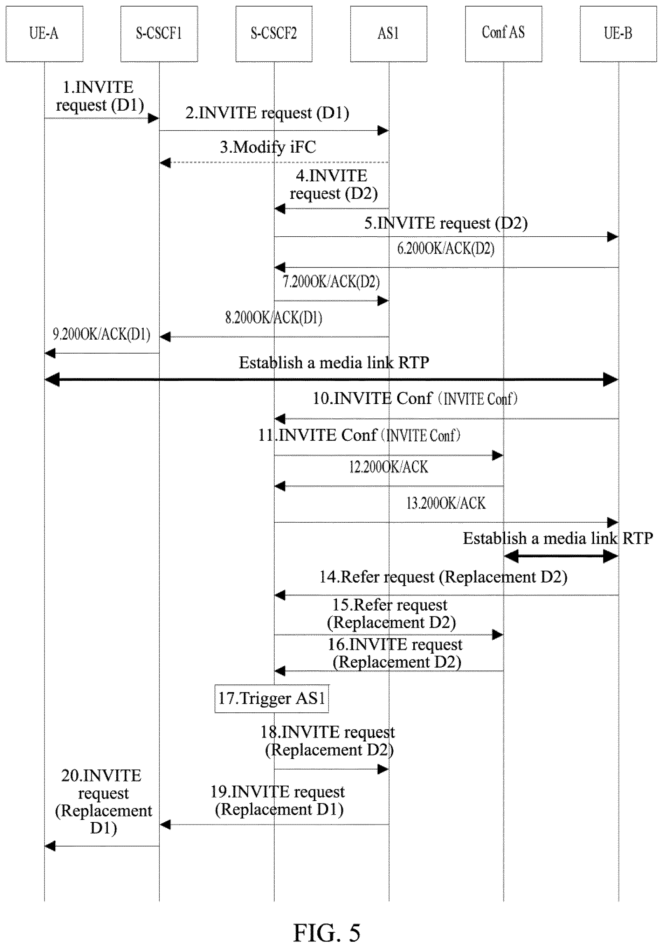

FIG. 5 is a flow diagram of the method according to another application example of the present invention.

### Preferred Embodiments of the Present Invention

In order to solve the problem existing in the related art, the idea of the present invention is described as follows.

With reference to FIG. 2 and FIG. 3, for a new initial request (i.e. an initial request of a Dialog3 in the figure, also called as a second initial request below), an AS1 executing the B2BUA behavior is not a network element which the initial request must go through, and even a Serving-Call Session Control Function (S-CSCF) accepting the initial request of the Dialog3 is also not an original S-CSCF (a S-CSCF accepting a Dialog1 and a Dialog2), because an Interrogating Call Session Control Function (I-CSCF) can select different S-CSCFs (e.g. a S-CSCF2) to accept it. Therefore, even though the original S-CSCF is selected to perform Dialog ID replacement for a Replaces Header, the problem also can not be solved.

Therefore, it would be best if an Application Server (AS) performing Dialog1 and Dialog2 replacements performs Dialog ID replacement for the Replaces Header, which is more appropriate.

Moreover, in practical applications, FIG. 3 is taken as an example, a user that initiates a new call request (Dialog4) and a user that accepts the Dialog3 request are often the same user or other users that have a service relationship with the user, therefore, the user that initiates the new call request generally includes the following situations: 1) all Public User Identities (PUI) corresponding to a Private User Identity (PVI) of the user; 2) an alias of the user; 3) other users that have a service relationship with the user.

Based on the above idea, the present invention provides a method for an AS replacing a Replaces parameter, which is applied to an IP Multimedia Subsystem (IMS). The technical scheme used by the present invention is specifically described as follows.

The AS, as a Routeing Back to Back User Agent (Routeing B2BUA) or an Initiating B2BUA and executing the B2BUA behavior, receives an initial request for a Dialog, modifies an Initial Filter Criteria (iFC) of a user of sending party of the initial request, or modifies an iFC of a user of receiving party of the initial request, or modifies an iFC of a service-related user of the receiving party.

Wherein, the user includes all Public User Identities (PUI) corresponding to a Private User Identity (PVI) of the user, or an alias of the user.

The step of the AS modifying the iFC specifically includes:
the AS modifying the iFC in a Home Subscriber Server (HSS), and modifying the iFC in a Serving-Call Session Control Function (S-CSCF) through the HSS; or,
the AS modifying the iFC in the HSS and the iFC in the S-CSCF.

When the AS modifies the iFC of the user of sending party of the initial request,
the S-CSCF is a S-CSCF of the user of sending party of the initial request, and the HSS is a HSS of the user of sending party of the initial request;
modifying the iFC is specifically: adding a triggering rule and placing the triggering rule at the head of a triggering sequence of the iFC;
a Service Point Trigger of the triggering rule is specifically:
if the user of receiving party that receives a second initial request is the user of sending party of the initial request,
and when the second initial request carries a Replaces Header, if a Dialog ID of the Replaces Header is a Dialog ID of an outgoing side of the AS in the initial request, triggering the AS.

When the AS modifies the iFC of the user of receiving party of the initial request, or modifies the iFC of the service-related user of the receiving party,
the S-CSCF is a S-CSCF of the user of receiving party of the initial request, and the HSS is a HSS of the user of receiving party of the initial request; or,
the S-CSCF is a S-CSCF of the service-related user of the receiving party of the initial request, and the HSS is a HSS of the service-related user of the receiving party of the initial request;
modifying the iFC is specifically: adding a triggering rule and placing the triggering rule at the head of a triggering sequence of the iFC;
a Service Point Trigger of the triggering rule is specifically:
if the user of sending party that receives a second initial request is the user of receiving party of the initial request or the service-related user of the receiving party of the initial request,
and when the second initial request carries a Replaces Header, if a Dialog ID of the Replaces Header is a Dialog ID of an outgoing side of the AS in the initial request, triggering the AS.

When the above S-CSCF receives the second initial request, the AS is triggered according to the modified iFC.

Therefore, since the iFC is modified, even though the S-CSCF accepting the Dialog3 is not an original S-CSCF but another S-CSCF, according to the modified iFC, the S-CSCF accepting the second initial request can trigger the AS which has performed the B2BUA behavior and execute a Dialog ID replacement for the Replaces Header.

When the initial request goes through multiple ASs executing B2BUA behaviors according to a first sequence, modifying the iFC is specifically: according to the first sequence, adding a triggering rule of the current AS and placing the triggering rule at the head of the triggering sequence of the iFC, so that the added triggering rules corresponding to the multiple ASs at the head of the modified iFC are arranged in a reversed order according to the first sequence.

As shown in FIG. 3, during a certain IMS call, an AS1 receives an initial request for a Dialog1, executes the B2BUA behavior to replace the Dialog1 with a Dialog2, modifies an iFC, adds a triggering rule of the AS1 and places the triggering rule at the head of a triggering sequence of the iFC; an AS2 receives an initial request for the Dialog2, executes the B2BUA behavior to replace the Dialog2 with a Dialog3, modifies the iFC, adds a triggering rule of the AS2 and places the triggering rule at the head of the triggering sequence of the iFC.

A subsequent S-CSCF2 receives an initial request for a Dialog4, and if a Dialog ID parameter in a Replaces Header of the initial request is the Dialog3, the AS2 is firstly triggered according to the modified iFC, and after the AS2 is triggered and the Dialog3 is replaced with the Dialog2 for the Dialog ID in the Replaces Header, the AS2 continues to use the Dialog4 to forward the initial request; the S-CSCF2 will trigger the AS1 according to the current iFC, and after the AS1 is triggered and the Dialog2 is replaced with the Dialog1 for the Dialog ID in the Replaces Header, the AS 1 continues to use the Dialog4 to forward the request.

Therefore, when multiple ASs have executed the B2BUA behaviors, an order of triggering these ASs is just opposite to an order of triggering these ASs in the Dialog1-Dialog2 direction, and through such reverse replacement, the Replaces Header can just be replaced correctly and completely.

After the dialog ends, the AS restores the modified iFC to an original iFC.

The implementation for the technical scheme of the present invention will be further described in detail in combination with the accompanying drawings and specific examples below.

### Example 1

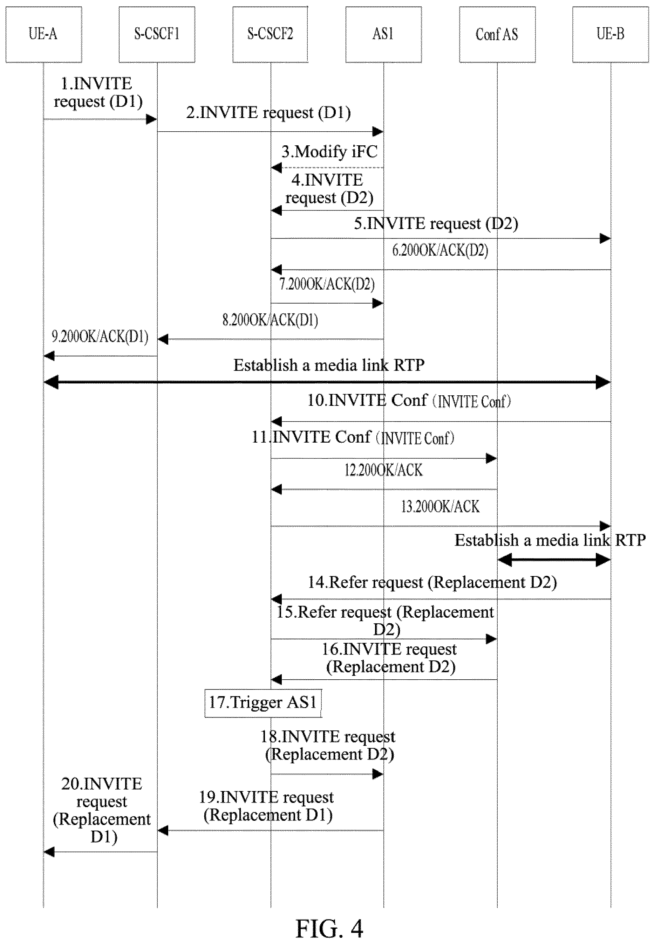

In the example, an AS executing the B2BUA behavior modifies an iFC of a receiving party of an initial request, with reference to FIG.4, the procedure of the method for the AS replacing a Replaces parameter is specifically described as follows, and the following steps are included.

In step 1, the UE-A initiates an initial request for a Dialog, such as an INVITE request, to the UE-B, and the Dialog ID is D1.

In step 2, a S-CSCF1 of the UE-A sends the INVITE request to a B2BUA AS1.

In step 3, the AS1 modifying the iFC is specifically: adding a triggering rule of the AS1 and placing the triggering rule at the head of a triggering sequence of the current iFC.

A Service Point Trigger of the triggering rule is specifically: if a sending party which receives a second initial request is a user of the receiving party of the initial request or a service-related user of the receiving party of the initial request,
and when the second initial request carries a Replaces Header, if the Dialog ID of the Replaces Header is a Dialog ID (i.e. D2) of an outgoing side of the AS1 in the initial request, triggering the AS 1.

Wherein, the AS1 modifying the iFC includes: modifying a S-CSCF (i.e. a S-CSCF2) of the receiving party (i.e. the UE-B) of the above initial request and a HSS of the receiving party (i.e. the UE-B) of the above initial request; or a S-CSCF of an alias of the UE-B and a HSS of the alias of the UE-B; or a S-CSCF of the service-related user of the UE-B and the iFC in the HSS of the service-related user of the UE-B.

When the iFC is modified, the AS1 can modify the iFC in the above HSS and modify the iFC (the S-CSCF queries and downloads the user iFC from the HSS during the user registration) in the corresponding S-CSCF through the above HSS. Specifically, the related iFC stored in the HSS can be modified through an Sh interface, and the HSS is triggered to modify the downloaded iFC in the S-CSCF;
or, the AS1 also can modify the iFC in the above HSS and the iFC in the corresponding S-CSCF, wherein, the AS1 can modify the downloaded iFC in the S-CSCF through a newly added interface between the AS1 and the S-CSCF.

In step 4, the AS1 executes the B2BUA behavior, replaces the D1 with the D2 for the Dialog ID, and forwards the INVITE request to the S-CSCF2 of the UE-B.

In step 5, the S-CSCF2 forwards the INVITE request to the UE-B.

In steps 6∼9, according to the existing standard, the UE-B sends a 200 OK message, and the 200 OK message is forwarded to the UE-A after going through the S-CSCF2, AS1 and S-CSCF1 in sequence, wherein, when the 200 OK message reaches the AS1, the AS1 replaces the D2 with the D1; the UE-A returns an Acknowledgement (ACK) message, and the ACK message is forwarded to the UE-B after going through the S-CSCF1, AS1 and S-CSCF2 in sequence (i.e. according to a reverse direction of the direction indicated by the arrow in the figure), wherein, when the ACK message reaches the AS1, the AS1 replaces the D1 with the D2;

After completing the above steps, a media link is established between the UE-A and the UE-B through a Real-time Transport Protocol (RTP) media stream.

In step 10, the UE-B initiates an INVITE Conference (INVITE Conf) request.

In step 11, the S-CSCF2 sends the INVITE Conf request to a Conference Application Server (Conf AS).

In steps 12∼13, according to the existing standard, the Conf AS performs a process of the 200 OK message and the ACK message between the Conf AS and the UE-B through the S-CSCF2, and the process is the existing process, which will not be repeated in detail here.

After completing the above steps, the media link will be established between the UE-B and the Conf AS.

In step 14, the UE-B sends a Refer request carrying the Replaces header, and the Dialog ID of the Replaces header is the D2.

In step 15, the S-CSCF2 forwards the Refer request to the Conf AS.

In step 16, according to the existing standard, the Conf AS will initiate the INVITE request carrying the Replaces header after receiving the Refer request, and the Dialog ID of the Replaces header is the D2.

In step 17, the S-CSCF2 receives the INVITE request, which accords with the triggering rule of the AS1 according to the current iFC, that is, the user of the sending party that receives the second initial request (the INVITE request) is the service-related user (here, the Conf AS is the service-related user of the UE-B) of the receiving party (i.e. the UE-B) of the above initial request; if the INVITE request carries the Replaces header and the Dialog ID of the Replaces header is the D2, the AS1 is triggered.

In step 18, the S-CSCF2 forwards the INVITE request to the AS1.

In step 19, the AS1 replaces the Dialog ID of the Replaces header carried in the INVITE request with the D1 and forwards the INVITE request to the S-CSCF1.

In step 20, the S-CSCF1 forwards the received INVITE request to the UE-A.

It should be noted that, in the example, the service-related user of the receiving party of the initial request is taken as an example to perform the description, but it is not only limited to this kind of situation. The technical scheme of the present invention is also applied to the situations of the user of receiving party or the alias of the receiving party.

### Example 2

The main difference between the example and the procedure of the example show in FIG. 4 is that an AS executing the B2BUA behavior modifies an iFC of a sending party of an initial request in the example.

Now, the different steps between the procedure of the method for the AS replacing a Replaces parameter in the example and the procedure shown in FIG. 4 are listed as follows.

In step 3, the AS1 modifying the iFC is specifically: adding a triggering rule of the AS1 and placing the triggering rule at the head of a triggering sequence of the current iFC.

A Service Point Trigger of the triggering rule is specifically: if a user of receiving party that receives a second initial request is a user of the sending party of the initial request,
and when the second initial request carries a Replaces Header, if a Dialog ID of the Replaces Header is a Dialog ID (i.e. D2) of an outgoing side of the AS in the initial request, triggering the AS.

Wherein, the AS1 modifying the iFC includes: modifying a S-CSCF (i.e. S-CSCF1) of the sending party (i.e. the UE-A) of the above initial request and the iFC in a HSS of the sending party (i.e. the UE-A) of the above initial request.

When the iFC is modified, the AS1 can modify the iFC in the above HSS and modify the iFC (the S-CSCF queries and downloads the user iFC from the HSS during the user registration) in the corresponding S-CSCF through the above HSS. Specifically, the related iFC stored in the HSS can be modified through an Sh interface, and the HSS is triggered to modify the downloaded iFC in the S-CSCF;
or, the AS1 also can modify the iFC in the above HSS and the iFC in the corresponding S-CSCF, wherein, the AS1 can modify the downloaded iFC in the S-CSCF through a newly added interface between the AS1 and the S-CSCF.

In step 17, the S-CSCF2 receives the INVITE request, which accords with the triggering rule of the AS1 according to the current iFC, that is, the receiving party which receives the second initial request (the INVITE request) is the sending party (the UE-A) of the above initial request; if the INVITE request carries the Replaces header and the Dialog ID of the Replaces header is the D2, the AS1 is triggered.

Except the above differences, the other operation steps of the procedure in the example are basically identical with the steps in the example shown in FIG. 4, and the identical or similar methods will not be described repeatedly here.

It can be seen from the above procedure that, the application server which accepts a new initial request (INVITE) in step 16 is not the AS1 any more, but the Conf AS. Therefore, if the related art is followed, the new initial request will not be triggered to the AS1 at all. Consequently, in steps 19∼20, a correct replacement for the Replaces header can not be implemented, and then the S-CSCF1 and UE-A can not identify the Dialog ID of the Replaces header.

After using the technical scheme of the present invention, it can be guaranteed that the new initial request is triggered to the AS1, which implements the correct replacement for the Replaces Header.

Correspondingly, the example of the present invention also provides a system for an AS replacing a Replaces parameter, which is applied to the AS executing the B2BUA behavior in an IMS. The system includes an iFC modification unit, wherein:
the iFC modification unit is configured to: when the AS, as a Routeing B2BUA or an Initiating B2BUA receives an Initial request for a dialog, modify an iFC of a user of sending party of the initial request, or modify an iFC of a user of receiving party of the initial request, or modify an iFC of a service-related user of the receiving party.

The system also includes a HSS,
the iFC modification unit is configured to: modify the iFC in the HSS, and indicate the HSS to modify the iFC in a S-CSCF; or, modify the iFC in the HSS and the iFC in the S-CSCF;
the HSS is configured to: modify the iFC in the S-CSCF according to an indication of the iFC modification unit.

The S-CSCF is a S-CSCF of the user of receiving party of the initial request, and the HSS is a HSS of the user of receiving party of the initial request; or,
the S-CSCF is a S-CSCF of the service-related user of the receiving party of the initial request, and the HSS is a HSS of the service-related user of the receiving party of the initial request;
modifying the iFC is specifically: adding a triggering rule and placing the triggering rule at the head of a triggering sequence of the iFC;
a Service Point Trigger of the triggering rule is specifically: if the user of sending party that receives a second initial request is the user of receiving party of the initial request, or the service-related user of the receiving party of the initial request, and when the second initial request carries a Replaces Header, if a Dialog ID of the Replaces Header is a Dialog ID of an outgoing side of the AS in the initial request, triggering the AS.

The S-CSCF is a S-CSCF of the user of sending party of the initial request, and the HSS is a HSS of the user of sending party of the initial request;
modifying the iFC is specifically: adding a triggering rule and placing the triggering rule at the head of a triggering sequence of the iFC;
a Service Point Trigger of the triggering rule is specifically: if the user of receiving party that receives a second initial request is the user of sending party of the initial request, and when the second initial request carries a Replaces Header, if a Dialog ID of the Replaces Header is a Dialog ID of an outgoing side of the AS in the initial request, triggering the AS.

The iFC modification unit is also configured to: after the dialog ends, restore the modified iFC to an original iFC.

The above description is only the preferred examples of the present invention, which is not used to limit the present invention. The present invention can have various modifications and changes for the people skilled in the art, as long as these modifications, equivalent substitutions, and improvements fall into the protection scope of the present invention, which is only defined by the appended claims.

### Industrial Applicability

After using the technical scheme of the present invention, it can be guaranteed that a new initial request is triggered to the AS, which implements a correct replacement for a Replaces header.

## Claims

1. A method for replacing a Replaces parameter, applied to an IP Multimedia Subsystem, IMS, comprising:
an Application Server, AS, as a Routeing Back to Back User Agent, B2BUA, or an Initiating B2BUA, receiving an initial request for a dialog (S1, S2), modifying an Initial Filter Criteria, iFC, of a user of sending party of the initial request, or modifying an iFC of a user of receiving party of the initial request, or modifying an iFC of a service-related user of the receiving party of the initial request (S3); wherein,
the step of the AS modifying the iFC comprises:
the AS modifying an iFC in a Home Subscriber Server, HSS, and modifying an iFC in a Serving-Call Session Control Function, S-CSCF, through the HSS; or, the AS modifying the iFC in the HSS and the iFC in the S-CSCF;
**characterized in that**, when the S-CSCF is a S-CSCF of the user of receiving party of the initial request, and the HSS is a HSS of the user of receiving party of the initial request, or,
when the S-CSCF is a S-CSCF of the service-related user of the receiving party of the initial request, and the HSS is a HSS of the service-related user of the receiving party of the initial request,
modifying the iFC comprises: adding a triggering rule and placing the triggering rule at the head of a triggering sequence of the iFC;
a Service Point Trigger of the triggering rule is:
if the user of sending party of a second initial request is the user of receiving party of the initial request or the service-related user of the receiving party of the initial request,
and when the second initial request carries a Replaces Header, if a Dialog ID of the Replaces Header is a Dialog ID of an outgoing side of the AS in the initial request, triggering the AS;
wherein, when the S-CSCF is a S-CSCF of the user of sending party of the initial request, and the HSS is a HSS of the user of sending party of the initial request, modifying the iFC comprises: adding a triggering rule and placing the triggering rule at the head of a triggering sequence of the iFC;
a Service Point Trigger of the triggering rule is:
if the user of receiving party of a second initial request is the user of sending party of the initial request,
and when the second initial request carries a Replaces Header, if a Dialog ID of the Replaces Header is a Dialog ID of an outgoing side of the AS in the initial request, triggering the AS.

2. The method according to claim 1, wherein,
the user includes all Public User Identities, PUI, corresponding to a Private User Identity, PVI, of the user, or an alias of the user.

3. The method according to claim 1, further comprising:
when the S-CSCF receives the second initial request, triggering the AS according to the modified iFC.

4. The method according to claim 1 or 2, further comprising:
after the dialog ends, the AS restoring the modified iFC to an original iFC.

5. The method according to claim 1, wherein,
when the initial request goes through multiple ASs which execute B2BUA behavior according to a first sequence, modifying the iFC comprises: according to the first sequence, adding a triggering rule of current AS and placing the triggering rule at the head of the triggering sequence of the iFC, so that the added triggering rules corresponding to the multiple ASs at the head of the modified iFC are arranged in a reversed order according to the first sequence.

6. A system for replacing a Replaces parameter, applied to an IP Multimedia Subsystem, IMS, comprising an Application Server, AS, executing Back to Back User Agent, B2BUA, behavior, and the AS comprising an Initial Filter Criteria, iFC, modification unit, wherein:
the iFC modification unit is configured to: when the AS, as a Routeing B2BUA or an Initiating B2BUA, receives an initial request for a dialog, modify an iFC of a user of sending party of the initial request, or modify an iFC of a user of receiving party of the initial request, or modify an iFC of a service-related user of the receiving party of the initial request;
wherein, the system further comprises a Home Subscriber Server, HSS;
the iFC modification unit is configured to: modify an iFC in the HSS, and indicate the HSS to modify an iFC in a S-CSCF; or, modify the iFC in the HSS and the iFC in the S-CSCF;
the HSS is configured to: modify the iFC in the S-CSCF according to an indication of the iFC modification unit;
**characterized in that**, when the S-CSCF is a S-CSCF of the user of receiving party of the initial request, and the HSS is a HSS of the user of receiving party of the initial request; or,
when the S-CSCF is a S-CSCF of the service-related user of the receiving party of the initial request, and the HSS is a HSS of the service-related user of the receiving party of the initial request, modifying the iFC comprises: adding a triggering rule and placing the triggering rule at the head of a triggering sequence of the iFC;
a Service Point Trigger of the triggering rule is: if the user of sending party of a second initial request is the user of receiving party of the initial request or the service-related user of the receiving party of the initial request, and when the second initial request carries a Replaces Header, if a Dialog ID of the Replaces Header is a Dialog ID of an outgoing side of the AS in the initial request, triggering the AS;
wherein, when the S-CSCF is a S-CSCF of the user of sending party of the initial request, and the HSS is a HSS of the user of sending party of the initial request, modifying the iFC comprises: adding a triggering rule and placing the triggering rule at the head of a triggering sequence of the iFC; a Service Point Trigger of the triggering rule is: if the user of receiving party of a second initial request is the user of sending party of the initial request, and when the second initial request carries a Replaces Header, if a Dialog ID of the Replaces Header is a Dialog ID of an outgoing side of the AS in the initial request, triggering the AS.

7. The system according to claim 6, wherein,
the iFC modification unit is further configured to: after the dialog ends, restore the modified iFC to an original iFC.

## Patentansprüche

1. Verfahren zum Ersetzen eines Ersatzparameters, der auf ein IP-Multimedia-Subsystem, IMS, angewendet wird, umfassend:
einen Anwendungsserver, AS, als Routing-Back-to-Back-Nutzer-Agent, B2BUA, oder einen initiierenden B2BUA, der eine Initialanforderung für einen Dialog empfängt (S1, S2), ein Initialfilterkriterium, iFC, eines Benutzers der Absenderpartei der Initialanforderung modifiziert, oder ein iFC eines Benutzers der Empfangspartei der Initialanforderung modifiziert, oder ein iFC eines dienstbezogenen Benutzers der Empfangspartei der Initialanforderung modifiziert (S3), wobei,
der Schritt des AS, der das iFC modifiziert, Folgendes umfasst:
den AS, der ein iFC in einem Home-Subscriber-Server, HSS, modifiziert, und ein iFC in einer Serving-Call Session Control Function, S-CSCF, über den HSS modifiziert; oder den AS, der das iFC in dem HSS und das iFC in der S-CSCF modifiziert;
**dadurch gekennzeichnet, dass**, wenn die S-CSCF eine S-CSCF des Benutzers der Empfangspartei der Initialanforderung ist, und der HSS ein HSS des Benutzers der Empfangspartei der Initialanforderung ist, oder, wenn die S-CSCF eine S-CSCF des dienstbezogenen Benutzers der Empfangspartei der Initialanforderung ist, und der HSS ein HSS des dienstbezogenen Benutzers der Empfangspartei der Initialanforderung ist,
das Modifizieren des iFC, Folgendes umfasst: Hinzufügen einer Triggerregel und Platzieren der Triggerregel an der Spitze einer Triggersequenz des iFC;
ein Servicepunkttrigger der Triggerregel lautet:
wenn der Benutzer der Sendepartei einer zweiten Initialanforderung der Benutzer der Empfangspartei der Initialanforderung oder der dienstbezogene Benutzer der Empfangspartei der Initialanforderung ist, und wenn die zweite Initialanforderung einen Replaces-Header trägt, wenn eine Dialog-ID des Replaces-Headers eine Dialog-ID einer ausgehenden Seite des AS in der Initialanforderung ist, Auslösen des AS;
wobei, wenn die S-CSCF eine S-CSCF des Benutzers der Sendepartei der Initialanforderung ist und der HSS ein HSS des Benutzers der Sendepartei der Initialanforderung ist, das Modifizieren des iFC Folgendes umfasst: Hinzufügen einer Triggerregel und Platzieren der Triggerregel an der Spitze einer Triggersequenz des iFC;
ein Servicepunkttrigger der Triggerregel lautet:
wenn der Nutzer der Empfangspartei einer zweiten Initialanforderung der Nutzer der Sendepartei der Initialanforderung ist,
und wenn die zweite Initialanforderung einen Replaces-Header trägt, wenn eine Dialog-ID des Replaces-Headers eine Dialog-ID einer ausgehenden Seite des AS in der Initialanforderung ist, Auslösen des AS.

2. Verfahren nach Anspruch 1, wobei,
der Benutzer alle öffentlichen Benutzeridentitäten, PUI, die einer privaten Benutzeridentität, PVI, des Benutzers oder einem Alias des Benutzers entsprechen, umfasst.

3. Verfahren nach Anspruch 1, ferner umfassend:
wenn die S-CSCF die zweite Initialanforderung empfängt, Auslösen des AS gemäß dem modifizierten iFC.

4. Verfahren nach Anspruch 1 oder 2, ferner umfassend:
nach Beendigung des Dialogs Zurückstellen durch den AS der modifizierten iFC auf ein ursprüngliches iFC.

5. Verfahren nach Anspruch 1, wobei,
wenn die Initialanforderung mehrere AS durchläuft, die B2BUA-Verhalten gemäß einer ersten Sequenz ausführen, das Modifizieren des iFC Folgendes umfasst: gemäß der ersten Sequenz Hinzufügen einer Triggerregel des aktuellen AS und Platzieren der Triggerregel an der Spitze der Triggersequenz des iFC, so dass die hinzugefügten Triggerregeln, die den mehreren ASs an der Spitze des modifizierten iFC entsprechen, in umgekehrter Reihenfolge gemäß der ersten Sequenz angeordnet sind.

6. System zum Ersetzen eines Ersatzparameters, der auf ein IP-Multimedia-Subsystem, IMS, angewendet wird, umfassend einen Anwendungsserver, AS, der Back-to-Back-Nutzer-Agent, B2BUA-Verhalten ausführt, und den AS, der eine Initialfilterkriterium, iFC-Modifikationseinheit, umfasst, wobei: die iFC-Modifikationseinheit konfiguriert ist, um: wenn der AS als Routing-B2BUA oder Initiator-B2BUA eine Initialanforderung für einen Dialog empfängt, Modifizieren eines iFC eines Benutzers der Sendepartei der Initialanforderung, oder Modifizieren eines iFC eines Benutzers der Empfangspartei der Initialanforderung, oder
Modifizieren eines iFC eines dienstbezogenen Benutzers der Empfangspartei der Initialanforderung;
wobei das System ferner einen Home-Subscriber-Server, HSS, umfasst;
die iFC-Modifikationseinheit konfiguriert ist, um: eine iFC in der HSS zu modifizieren und die HSS anzugeben, um eine iFC in einer S-CSCF zu modifizieren; oder die iFC in der HSS und die iFC in der S-CSCF zu modifizieren; die HSS ist konfiguriert, um: die iFC in der S-CSCF gemäß einer Angabe der iFC-Modifikationseinheit zu modifizieren;
**dadurch gekennzeichnet, dass**, wenn die S-CSCF eine S-CSCF des Benutzers der Empfangspartei der Initialanforderung ist und der HSS ein HSS des Benutzers der Empfangspartei der Empfangspartei der Initialanforderung ist; oder, wenn die S-CSCF eine S-CSCF des dienstbezogenen Benutzers der Empfangspartei der Initialanforderung ist und der HSS ein HSS des dienstbezogenen Benutzers der Empfangspartei der Initialanforderung ist, das Modifizieren des iFC Folgendes umfasst: Hinzufügen einer Triggerregel und Anordnen der Triggerregel an der Spitze einer Triggersequenz des iFC;
ein Servicepunkt-Trigger der Triggerregel lautet: wenn der Benutzer der Sendepartei einer zweiten Initialanforderung der Benutzer der Empfangspartei der Initialanforderung oder der dienstbezogene Benutzer der Empfängerpartei der Initialanforderung ist, und wenn die zweite Initialanforderung einen Replaces-Header trägt, wenn eine Dialog-ID des Replaces-Headers eine Dialog-ID einer ausgehenden Seite des AS in der Initialanforderung ist, Auslösen des AS;
wobei, wenn die S-CSCF eine S-CSCF des Benutzers der Sendepartei der Initialanforderung ist und der HSS ein HSS des Benutzers der Sendepartei der Initialanforderung ist, das Modifizieren des iFC Folgendes umfasst: Hinzufügen einer Triggerregel und Platzieren der Triggerregel an der Spitze einer Triggersequenz des iFC;
ein Servicepunkt-Trigger der Triggerregel lautet: wenn der Benutzer der Empfangspartei eine zweite Initialanforderung der Benutzer der Sendepartei der Initialanforderung ist und wenn die zweite Initialanforderung einen Replaces-Header trägt, wenn eine Dialog-ID des Replaces-Headers eine Dialog-ID einer ausgehenden Seite des AS in der Initialanforderung ist, Auslösen des AS.

7. System nach Anspruch 6, wobei,
die iFC-Modifikationseinheit weiter konfiguriert ist, um: nach Beendigung des Dialogs das modifizierte iFC auf ein ursprüngliches iFC zurückzustellen.

## Revendications

1. Méthode pour remplacer un paramètre de remplacement, appliqué à un sous-système multimédia IP, IMS, comprenant :
un serveur d'applications, AS, en tant qu'agent d'utilisateurs dos-à-dos, B2BUA, de routage ou que B2BUA d'initiation, recevant une demande initiale de dialogue (51, S2), modifiant un critère de filtre initial, iFC, d'un utilisateur de partie émettrice de la demande initiale, ou modifiant un iFC d'un utilisateur de partie destinataire de la demande initiale, ou modifiant un iFC d'un utilisateur lié à un service de la partie destinataire de la demande initiale (S3) ; dans laquelle,
l'étape de l'AS modifiant l'iFC comprend :
l'AS qui modifie un iFC dans un serveur d'abonné résidentiel, HSS, et qui modifie un iFC dans une fonction de commande de session d'appel de service, S-CSCF, par l'intermédiaire du HSS ; ou, l'AS modifiant l'iFC dans le HSS et l'iFC dans la S-CSCF ;
**caractérisée en ce que** lorsque la S-CSCF est une S-CSCF de l'utilisateur de partie destinataire de la demande initiale, et que le HSS est un HSS de l'utilisateur de partie destinataire de la demande initiale, ou
lorsque la S-CSCF est une S-CSCF de l'utilisateur lié à un service de la partie destinataire de la demande initiale et que le HSS est un système HSS de l'utilisateur lié à un service de la partie destinataire de la demande initiale,
la modification de l'iFC comprend : l'ajout d'une règle de déclenchement et la mise en place de la règle de déclenchement en tête d'une séquence de déclenchement de l'iFC ;
un déclencheur de point de service de la règle de déclenchement est le suivant :
si l'utilisateur de partie émettrice d'une seconde demande initiale est l'utilisateur de la partie destinataire de la demande initiale ou l'utilisateur lié à un service de la partie destinataire de la demande initiale,
et lorsque la seconde demande initiale porte un en-tête de remplacement, si un ID de dialogue de l'en-tête de remplacement est un ID de dialogue d'un côté sortant de l'AS dans la demande initiale, le déclenchement de l'AS ;
dans laquelle, lorsque la S-CSCF est une S-CSCF de l'utilisateur de partie émettrice de la demande initiale, et que le HSS est un HSS de l'utilisateur de partie émettrice de la demande initiale, la modification de l'iFC comprend : l'ajout d'une règle de déclenchement et la mise en place de la règle de déclenchement en tête d'une séquence de déclenchement de l'iFC ;
un déclencheur de point de service de la règle de déclenchement est le suivant :
si l'utilisateur de partie destinataire d'une seconde demande initiale est l'utilisateur de partie émettrice de la demande initiale,
et lorsque la seconde demande initiale porte un en-tête de remplacement, si un ID de dialogue de l'en-tête de remplacement est un ID de dialogue d'un côté sortant de l'AS dans la demande initiale, le déclenchement de l'AS.

2. Méthode selon la revendication 1, dans laquelle
l'utilisateur comprend toutes les identités d'utilisateur publiques (PUI), qui correspondent à une identité d'utilisateur privé (PVI), de l'utilisateur, ou un alias de l'utilisateur.

3. Méthode selon la revendication 1, comprenant en outre :
lorsque la S-CSCF reçoit la seconde demande initiale, le déclenchement de l'AS conformément à l'iFC modifié.

4. Méthode selon la revendication 1 ou 2, comprenant en outre :
lorsque le dialogue est terminé, l'AS rétablissant l'iFC modifié à un iFC d'origine.

5. Méthode selon la revendication 1, dans laquelle
lorsque la demande initiale passe par plusieurs AS qui exécutent le comportement de B2BUA selon une première séquence, la modification de l'iFC comprend : selon la première séquence, l'ajout d'une règle de déclenchement de l'AS actuel et la mise en place de la règle de déclenchement en tête de la séquence de déclenchement de la iFC, de sorte que les règles de déclenchement ajoutées correspondant aux multiples AS situés en tête de l'iFC modifié soient agencées dans un ordre inversé par rapport à la première séquence.

6. Système de remplacement d'un paramètre de remplacement, appliqué à un sous-système multimédia IP, IMS, comprenant un serveur d'applications, AS, exécutant un comportement d'agent d'utilisateur dos-à-dos, B2BUA, et l'AS comprenant une unité de modification de critère de filtre initial, iFC, dans lequel :
l'unité de modification d'iFC est configurée pour : lorsque l'AS, en tant que B2BUA de routage ou B2BUA d'initiation, reçoit une demande de dialogue initiale, modifier un iFC d'un utilisateur de partie émettrice de la demande initiale, ou modifier un iFC d'un utilisateur de partie destinataire de la demande initiale, ou modifier un iFC d'un utilisateur lié à un service de la partie destinataire de la demande initiale ;
dans lequel, le système comprend en outre un serveur d'abonné résidentiel, HSS ;
l'unité de modification d'iFC est configurée pour : modifier un iFC dans le HSS, et indiquer au HSS de modifier un iFC dans une S-CSCF ; ou, modifier l'iFC dans le HSS et l'iFC dans la S-CSCF ;
le HSS est configuré pour : modifier l'iFC dans la S-CSCF en fonction d'une indication de l'unité de modification d'iFC ;
**caractérisé en ce que** lorsque la S-CSCF est une S-CSCF de l'utilisateur de partie destinataire de la demande initiale, et que le HSS est un HSS de l'utilisateur de partie destinataire de la demande initiale ; ou,
lorsque la S-CSCF est une S-CSCF de l'utilisateur lié à un service de la partie destinataire de la demande initiale, et que le HSS est un HSS de l'utilisateur lié à un service de la partie destinataire de la demande initiale, la modification de la iFC comprend : l'ajout d'une règle de déclenchement et la mise en place la règle de déclenchement en tête d'une séquence de déclenchement de l'iFC ;
un déclencheur de point de service de la règle de déclenchement est le suivant : si l'utilisateur de partie émettrice d'une seconde demande initiale est l'utilisateur de partie destinataire de la demande initiale ou l'utilisateur associé à un service de la partie destinataire de la demande initiale, et lorsque la seconde demande initiale porte un en-tête de remplacement, si un ID de dialogue de l'en-tête de remplacement est un ID de dialogue d'un côté sortant de l'AS dans la demande initiale, le déclenchement de l'AS ;
dans lequel, lorsque la S-CSCF est une S-CSCF de l'utilisateur de partie émettrice de la demande initiale, et que le HSS est un HSS de l'utilisateur de partie émettrice de la demande initiale, la modification de l'iFC comprend : l'ajout d'une règle de déclenchement et la mise en place de la règle de déclenchement en tête d'une séquence de déclenchement de l'iFC ; un déclencheur de point de service de la règle de déclenchement est le suivant : si l'utilisateur de partie destinataire d'une seconde demande initiale est l'utilisateur de partie émettrice de la demande initiale, et lorsque la seconde demande initiale porte un en-tête de remplacement, si un ID de dialogue de la valeur de l'en-tête de remplacement est un ID de dialogue d'un côté sortant de l'AS dans la demande initiale, le déclenchement de l'AS.

7. Système selon la revendication 6, dans lequel,
l'unité de modification d'iFC est en outre configurée pour : lorsque le dialogue est terminé, restaurer l'iFC modifié à un iFC d'origine.
